# EUROPEAN PATENT APPLICATION

(11) **EP 3 009 982 A1**
(43) Date of publication of application: **20.04.2016**
(21) Application number: 15180549.6
(22) Date of filing: 11.08.2015
(51) Int. Cl.: G06T 5/00

(54) **IMAGE ANTI-ALIASING METHOD AND APPARATUS**

(30) Priority: 17.10.2014 CN 201410553956
(71) Applicant: Huawei Technologies Co., Ltd., Longgang District Shenzhen, Guangdong 518129 (CN)
(72) Inventor: LV, Pei, 518129 Shenzhen (CN); SHEN, Yanhao, 518129 Shenzhen (CN); WANG, Rui, 518129 Shenzhen (CN); XU, Chao, 518129 Shenzhen (CN)
(74) Representative: Körber, Martin Hans

(57) **Abstract**

The present invention discloses an image anti-aliasing method and apparatus, where the method includes: acquiring a to-be-displayed image in a terminal; acquiring a current distance parameter of the terminal, where the current distance parameter is used to indicate a distance between an eye of a user of the terminal and a display screen of the terminal; determining a current anti-aliasing algorithm according to the current distance parameter by using a correspondence between a distance parameter and an anti-aliasing algorithm; and performing anti-aliasing processing on the to-be-displayed image according to the current anti-aliasing algorithm. In embodiments of the present invention, anti-aliasing processing is performed on a to-be-displayed image based on a distance parameter, that is, an anti-aliasing processing manner of the image is dynamically adjusted according to the distance parameter, which is more flexible when compared with the prior art.

## Description

### TECHNICAL FIELD

The present invention relates to the field of image processing, and in particular, to an image anti-aliasing method and apparatus.

### BACKGROUND

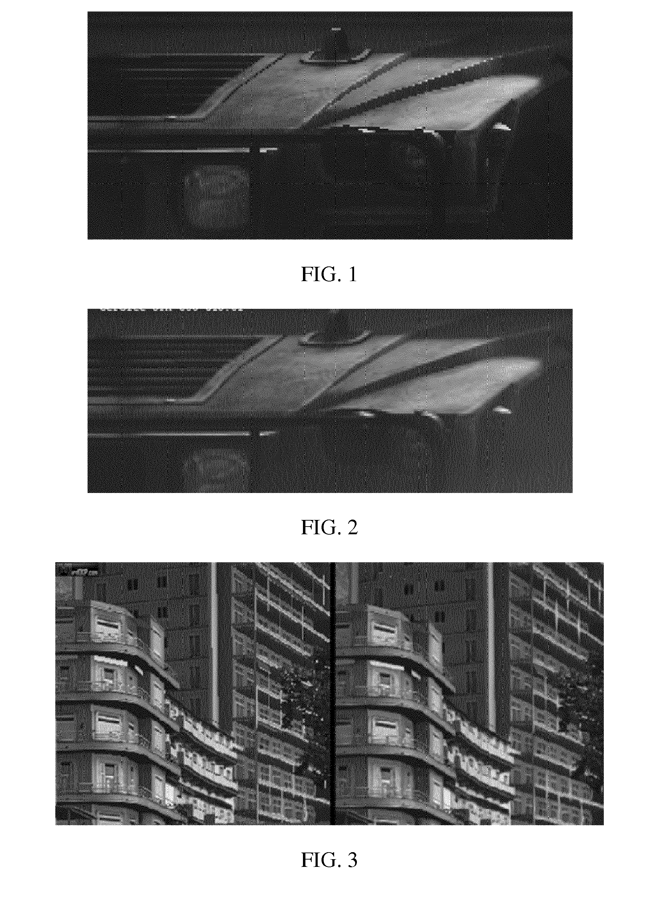

With development of display technologies, people have increasingly higher requirements on rendering quality of an image on a display screen. An aliasing phenomenon of an image is one of main factors affecting image quality. FIG. 1 is a rendered image, and it can be clearly seen from FIG. 1 that aliasing exists in boundaries between patterns in the image. A reason why the aliasing phenomenon is generated is that people attempt to render a consecutive three-dimensional world by using a discrete method (such as, by using pixel points).

In the prior art, in order to avoid the image aliasing phenomenon, various anti-aliasing (Anti-aliasing) technologies are proposed. The so-called anti-aliasing is to smooth an aliased edge generated in a picture of a rendered image. In a conventional anti-aliasing technology, super sampling is performed on a pixel point on a screen to achieve an anti-aliasing objective, for example, a super sampling anti-aliasing (Super Sampling Anti-Aliasing, SSAA) technology needs to perform sampling on each pixel for more than once. During use of SSAA, a quantity of samples of each pixel may be set to two or four, and in this case, an actual rendering amount and bandwidth demand are 2*2 or 4*4 times those of an original picture. It can be obviously seen that, a calculation amount needed by SSAA is considerably large. In order to improve and optimize the SSAA technology, a multi sampling anti-aliasing (Multi Sampling Anti-Aliasing, MSAA) technology, a morphological anti-aliasing (Morphological Anti-Aliasing, MLAA) technology, a fast approximate anti-aliasing (Fast Approximate Anti-Aliasing, FXAA) technology, and an enhanced subpixel morphological anti-aliasing (Enhanced Subpixel Morphological Anti-Aliasing, SMAA) technology are further proposed subsequently. MSAA can be considered as an improved technology of SSAA, and has an "edge finding" capability, that is, when MSAA is used to perform anti-aliasing processing on an image, super sampling on a pixel point on a screen only occurs in a location such as an edge of a geometrical object. In this way, a quantity of pixels on which MSAA needs to be performed is much less relative to a quantity of pixels of an entire viewport, and therefore in many situations, a calculation loss of MSAA is much less than that of SSAA. FIG. 2 shows a result acquired after FIG. 1 is processed by means of the MSAA technology, and it can be seen that aliasing of boundaries of an object in FIG. 2 is already smoothed.

MLAA is a morphological anti-aliasing technology, where during pattern rendering, no operation is performed, and anti-aliasing processing is not performed until calculation is completed and a final rendering result is ready to be output. Therefore MLAA can be considered as a post-processing technology. A specific implementation principle of MLAA is that: a morphology of aliasing is calculated by using chromatic aberrations of edges, and then vacancies on the aliasing are filled by using a calculated transient color between the chromatic aberrations, thereby achieving a morphological anti-aliasing effect. MLAA is greatly advantageous over conventional MSAA in performance, and also greatly reduces an impact on a quantity of frames. FIG. 3 shows an effect of processing an image by means of MLAA, where an image before the processing is on a left side in FIG. 3, and an image processed by means of MLAA is on a right side in FIG. 3. It may be seen by comparing the images on the left and right sides that MLAA effectively suppresses the aliasing phenomenon.

Besides improving quality of a rendered picture, both conventional SSAA and improved MSAA and MLAA also increase calculating overheads of image rendering. However, different scenarios have different requirements on an image anti-aliasing effect, and in the prior art, once a video image processing begins, the anti-aliasing effect cannot be dynamically adjusted, which is inflexible.

### SUMMARY

Embodiments of the present invention provide an image anti-aliasing method and apparatus for dynamically adjusting an anti-aliasing processing manner of an image.

According to a first aspect, an image anti-aliasing method is provided, including: acquiring a to-be-displayed image in a terminal; acquiring a current distance parameter of the terminal, where the current distance parameter is used to indicate a distance between an eye of a user of the terminal and a display screen of the terminal; determining a current anti-aliasing algorithm according to the current distance parameter by using a correspondence between a distance parameter and an anti-aliasing algorithm; and performing anti-aliasing processing on the to-be-displayed image according to the current anti-aliasing algorithm.

With reference to the first aspect, in an implementation manner of the first aspect, the correspondence between a distance parameter and an anti-aliasing algorithm includes a correspondence between a first distance parameter and a first anti-aliasing algorithm, and a correspondence between a second distance parameter and a second anti-aliasing algorithm, and the determining a current anti-aliasing algorithm according to the current distance parameter by using a correspondence between a distance parameter and an anti-aliasing algorithm includes: when the current distance parameter is the first distance parameter, determining the first anti-aliasing algorithm as the current anti-aliasing algorithm; or when the current distance parameter is the second distance parameter, determining the second anti-aliasing algorithm as the current anti-aliasing algorithm.

With reference to the first aspect, in another implementation manner of the first aspect, the correspondence between a distance parameter and an anti-aliasing algorithm is a correspondence between a first distance parameter and a first anti-aliasing algorithm, and the determining a current anti-aliasing algorithm according to the current distance parameter by using a correspondence between a distance parameter and an anti-aliasing algorithm includes: when the current distance parameter is the first distance parameter, determining the first anti-aliasing algorithm as the current anti-aliasing algorithm.

With reference to the first aspect or any one of the foregoing implementation manners, in another implementation manner of the first aspect, the correspondence between a distance parameter and an anti-aliasing algorithm includes one-to-one correspondences between N distance parameters and N anti-aliasing algorithms, where N≥3, and the determining a current anti-aliasing algorithm according to the current distance parameter by using a correspondence between a distance parameter and an anti-aliasing algorithm includes: selecting a target distance parameter to which the current distance parameter belongs from the N distance parameters; and determining an anti-aliasing algorithm corresponding to the target distance parameter as the current anti-aliasing algorithm.

With reference to the first aspect or any one of the foregoing implementation manners, in another implementation manner of the first aspect, the acquiring a current distance parameter of the terminal includes: determining a distance between the user and the display screen by using a distance sensor on the terminal; and determining the current distance parameter of the terminal according to the distance.

With reference to the first aspect or any one of the foregoing implementation manners, in another implementation manner of the first aspect, the acquiring a current distance parameter of the terminal includes: determining an application currently used by the user of the terminal; and acquiring the current distance parameter according to the currently used application and a correspondence between an application and a distance parameter.

With reference to the first aspect or any one of the foregoing implementation manners, in another implementation manner of the first aspect, the acquiring a current distance parameter of the terminal includes: determining a usage scenario currently used by the user of the terminal; and acquiring the current distance parameter according to the current usage scenario and a correspondence between a usage scenario and a distance parameter.

According to a second aspect, an image anti-aliasing apparatus is provided, including: a first acquiring unit, configured to acquire a to-be-displayed image in a terminal; a second acquiring unit, configured to acquire a current distance parameter of the terminal, where the current distance parameter is used to indicate a distance between an eye of a user of the terminal and a display screen of the terminal; a determining unit, configured to determine a current anti-aliasing algorithm according to the current distance parameter by using a correspondence between a distance parameter and an anti-aliasing algorithm; and an anti-aliasing processing unit, configured to perform anti-aliasing processing on the to-be-displayed image according to the current anti-aliasing algorithm.

With reference to the second aspect, in an implementation manner of the second aspect, the correspondence between a distance parameter and an anti-aliasing algorithm includes a correspondence between a first distance parameter and a first anti-aliasing algorithm, and a correspondence between a second distance parameter and a second anti-aliasing algorithm, and the determining unit is specifically configured to: when the current distance parameter is the first distance parameter, determine the first anti-aliasing algorithm as the current anti-aliasing algorithm; or when the current distance parameter is the second distance parameter, determine the second anti-aliasing algorithm as the current anti-aliasing algorithm.

With reference to the second aspect, in another implementation manner of the second aspect, the correspondence between a distance parameter and an anti-aliasing algorithm is a correspondence between a first distance parameter and a first anti-aliasing algorithm, and the determining unit is specifically configured to: when the current distance parameter is the first distance parameter, determine the first anti-aliasing algorithm as the current anti-aliasing algorithm.

With reference to the second aspect or any one of the foregoing implementation manners, in another implementation manner of the second aspect, the correspondence between a distance parameter and an anti-aliasing algorithm includes one-to-one correspondences between N distance parameters and N anti-aliasing algorithms, where N≥3, and the determining unit is specifically configured to select a target distance parameter to which the current distance parameter belongs from the N distance parameters; and determine an anti-aliasing algorithm corresponding to the target distance parameter as the current anti-aliasing algorithm.

With reference to the second aspect or any one of the foregoing implementation manners, in another implementation manner of the second aspect, the second acquiring unit is specifically configured to determine a distance between the user and the display screen by using a distance sensor on the terminal; and determine the current distance parameter of the terminal according to the distance.

With reference to the second aspect or any one of the foregoing implementation manners, in another implementation manner of the second aspect, the second acquiring unit is specifically configured to determine an application currently used by the user of the terminal; and acquire the current distance parameter according to the currently used application and a correspondence between an application and a distance parameter.

With reference to the second aspect or any one of the foregoing implementation manners, in another implementation manner of the second aspect, the second acquiring unit is specifically configured to determine a usage scenario currentl by the user of the terminal; and acquire the current distance parameter according to the current usage scenario and a correspondence between a usage scenario and a distance parameter.

In the embodiments of the present invention, anti-aliasing processing is performed on a to-be-displayed image based on a distance parameter, that is, an anti-aliasing processing manner of the image is dynamically adjusted according to the distance parameter, which is more flexible when compared with the prior art.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is an image after anti-aliasing processing;
FIG. 2 is an image after MSAA processing;
FIG. 3 is a comparison diagram of images before and after MLAA processing;
FIG. 4 is a schematic flowchart of an image anti-aliasing method according to an embodiment of the present invention;
FIG. 5 is a schematic flowchart of an image anti-aliasing method according to an embodiment of the present invention;
FIG. 6 is a schematic block diagram of an image anti-aliasing apparatus according to an embodiment of the present invention; and
FIG. 7 is a schematic block diagram of an image anti-aliasing apparatus according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

With continuous development of mobile terminals, and popularization of various projection devices, people have higher requirements on rendering of a video image. For example, when watching a video on a mobile terminal, besides requiring a high-quality rendering effect of a video image, a user further hopes that power consumption can be reduced as much as possible. For another example, for a video image played on a projection device with a large screen, a frame rate needs to be ensured in addition to a high-quality rendering effect of the video image.

It is well known that, aliasing is relatively subtle on a display screen, and can be observed only when an observer is close to the screen. In other words, a clarity degree of the aliasing displayed on the screen is relevant to a distance between the observer and the screen. In general, the aliasing observed by the observer becomes clearer as the observer becomes closer to the screen. If the observer is farther away from the screen, aliasing can be seen by the observer is greatly reduced, or even cannot sensed by the observer at all over a certain distance.

When a user of a mobile terminal (such as a mobile phone) watches a video on a display screen, a distance between the user and the display screen constantly changes. Similarly, a viewer of a projection device with a large screen is also on the move, and therefore, a distance between the viewer and the projection screen also dynamically changes. At different distances, Degrees of perception of the viewer on an anti-aliasing effect are different. Therefore when a distance between an eye of the user and the display screen reaches an extent, an improvement on the rendering effect brought about by anti-aliasing calculation becomes very small, or can even be completely ignored. If fine anti-aliasing rendering is still performed on an image (a displayed picture) in this case, calculation resources are wasted.

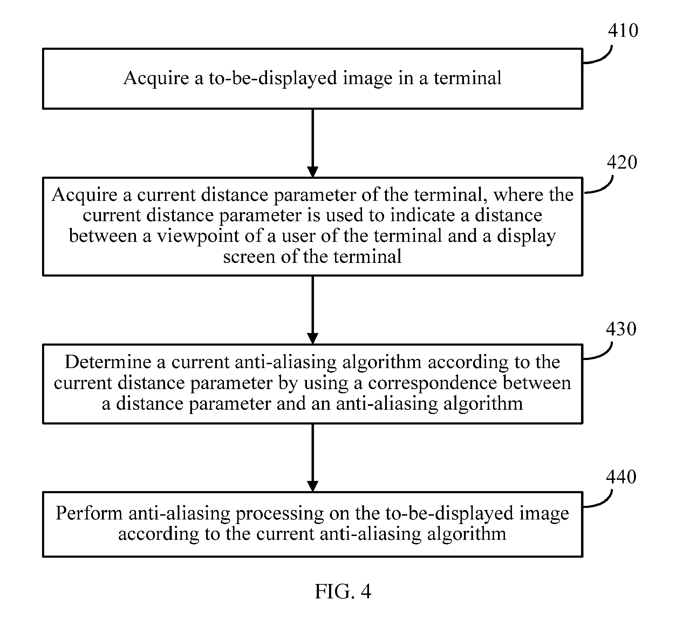

FIG. 4 is a schematic flowchart of an image anti-aliasing method according to an embodiment of the present invention. The method in FIG. 4 includes:

410: Acquire a to-be-displayed image in a terminal.

It should be understood that, the to-be-displayed image may be an image obtained by means of common image rendering. It should be noted that, after the common image rendering, aliasing phenomena of different extents generally exist in the image; in this case, the image is not output yet, and data of the image is stored in a buffer (such as a G-buffer). Specifically, common image rendering may include: calculating a geometrical polygon of an image, determining a characteristic of a surface material, calculating incident illumination, calculating an effect of illumination on a surface, and the like. By means of the common image rendering, information such as a pixel (color) value, a luminance (Luma) value, or a depth value of the image can be acquired.

420: Acquire a current distance parameter of the terminal, where the current distance parameter is used to indicate a distance between an eye of a user of the terminal and a display screen of the terminal.

Optionally, as an embodiment, step 420 may include: determining a distance between the user and the display screen by using a distance sensor on the terminal; and determining the current distance parameter of the terminal according to the distance.

Optionally, as an embodiment, step 420 may include: determining an application currently used by the user of the terminal; and acquiring the current distance parameter according to the currently used application and a correspondence between an application and a distance parameter.

It should be understood that, a correspondence between each application and a distance parameter can be established, and a correspondence between an application type and a distance parameter can also be established. For example, when a user uses a book-type APP, a distance between an eye of the user and a display screen of a mobile phone may be roughly estimated based on a size of the display screen and an average value of human eye visions.

Optionally, as an embodiment, the acquiring a current distance parameter of the terminal includes: determining a usage scenario of the terminal; and acquiring the current distance parameter according to the current usage scenario and a correspondence between a usage scenario and a distance parameter.

430: Determine a current anti-aliasing algorithm according to the current distance parameter by using a correspondence between a distance parameter and an anti-aliasing algorithm.

It should be understood that, implementation manners of step 430 are diversified, and not specifically limited in this embodiment of the present invention. As an implementation manner, when distances are different, different anti-aliasing algorithms may be used. For example, when the distance is relatively close, an SSAA algorithm with a higher precision may be selected, and when the distance is relatively far, an MLAA algorithm with a faster calculation speed may be used. As another implementation manner, when the distance is relatively close, an anti-aliasing parameter with relatively high quality may be selected, and when the distance is relatively far, anti-aliasing quality of an image may be reduced by adjusting the anti-aliasing parameter. For example, when the SSAA algorithm is used, and the distance is relatively close, a quantity of samples of each pixel may be set to 4, and when the distance is relatively far, the quantity of samples of each pixel may be set to 2. Other implementation manners of step 430 are described in detail subsequently with reference to specific embodiments, and are not detailed herein again.

440: Perform anti-aliasing processing on the to-be-displayed image according to the current anti-aliasing algorithm.

Reference may made to the prior art for step 440, and details are not described herein again.

In this embodiment of the present invention, anti-aliasing processing is performed on a to-be-displayed image based on a distance parameter, that is, an anti-aliasing processing manner is dynamically adjusted according to the distance parameter, which is more flexible when compared with the prior art. Specifically, when the distance between the viewer and the display screen is relatively far, an anti-aliasing algorithm with a fast calculation speed but general quality may be used, so as to save calculation resources, and when the distance between the viewer and the display screen is relatively close, an anti-aliasing algorithm with high quality may be used, so as to improve image rendering quality.

Optionally, as an embodiment, the correspondence between a distance parameter and an anti-aliasing algorithm includes a correspondence between a first distance parameter and a first anti-aliasing algorithm, and a correspondence between a second distance parameter and a second anti-aliasing algorithm, and step 430 may include: when the current distance parameter is the first distance parameter, determining the first anti-aliasing algorithm as the current anti-aliasing algorithm; and when the current distance parameter is the second distance parameter, determining the second anti-aliasing algorithm as the current anti-aliasing algorithm.

Optionally, as an embodiment, the correspondence between a distance parameter and an anti-aliasing algorithm is a correspondence between a first distance parameter and a first anti-aliasing algorithm, and step 430 may include: when the current distance parameter is the first distance parameter, determining the first anti-aliasing algorithm as the current anti-aliasing algorithm.

Optionally, as an embodiment, the correspondence between a distance parameter and an anti-aliasing algorithm includes one-to-one correspondences between N distance parameters and N anti-aliasing algorithms, where N≥3, and step 430 may include: selecting a target distance parameter to which the current distance parameter belongs from the N distance parameters; and determining an anti-aliasing algorithm corresponding to the target distance parameter as the current anti-aliasing algorithm.

In the following embodiments, on the basis of a morphological anti-aliasing algorithm, a distance parameter is introduced, so as to adjust an anti-aliasing algorithm of a to-be-displayed image on a terminal in real time. The morphological anti-aliasing algorithm may be MLAA, or may be the SMAA. For convenience of understanding, a rough process of MLAA in the prior art is first simply introduced.

First, by using a boundary detection algorithm, a current boundary (or referred to as an original boundary) of a to-be-displayed image is acquired. Specifically, a pixel point on the current boundary of the to-be-displayed image is acquired.

Second, on the basis of the current boundary, boundary reconstruction is performed, and a reconstructed boundary is acquired. Specifically, a pixel point on the reconstructed boundary is acquired.

Finally, anti-aliasing processing is performed on the to-be-displayed image based on the pixel point on the reconstructed boundary by using the morphological anti-aliasing algorithm. Specifically, weights of the pixel point on the reconstructed boundary and a pixel point in an adjacent domain thereof may be first calculated, and then colors are mixed based on the weights, to obtain an image after anti-aliasing processing. Reference is made to the prior art for a specific implementation, and details are not described herein again.

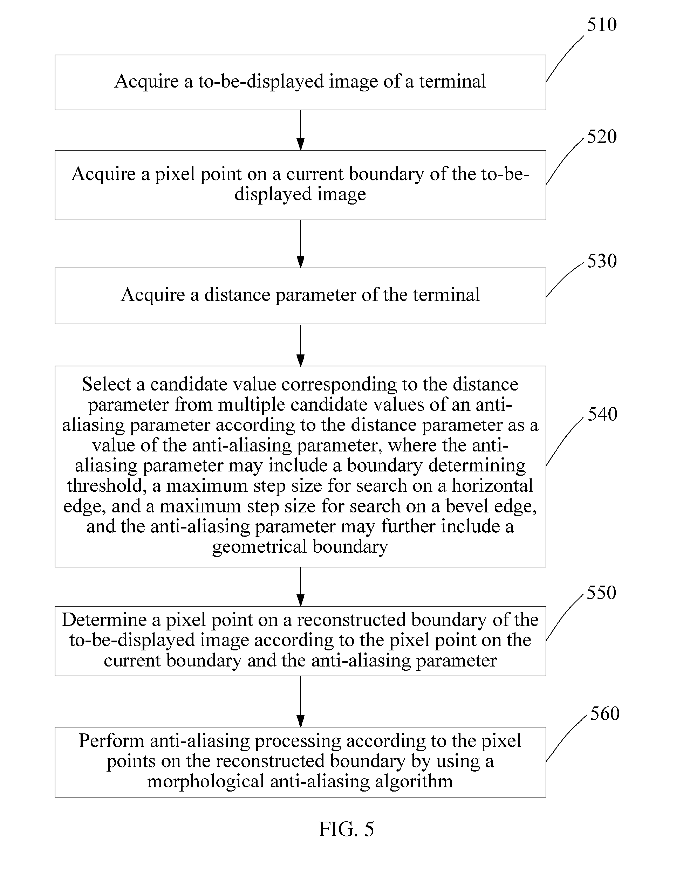

FIG. 5 is a flowchart of an embodiment under the foregoing calculation framework. The method in FIG. 5 includes:

510: Acquire a to-be-displayed image of a terminal.

It should be understood that, the to-be-displayed image may be an image obtained by means of common image rendering. It should be noted that, after the common image rendering, aliasing phenomena of different extents generally exist in the image; in this case, the image is not output yet, and data of the image is stored in a buffer (such as a G-buffer). Specifically, common image rendering may include: calculating a geometrical polygon of an image, determining a characteristic of a surface material, calculating incident illumination, calculating an effect of illumination on a surface, and the like. By means of the common image rendering, information such as a pixel (color) value, a luminance (Luma) value, or a depth value of the image can be acquired.

520: Acquire a pixel point on a current boundary of the to-be-displayed image.

Specifically, control may be performed according to the color value, the luminance (Luma) value, or the depth value in cooperation with a threshold, and boundary detection is performed on a rendering result pixel by pixel. During a specific implementation, it may be that only an upper pixel and a left pixel of each pixel is detected, and detection on a lower pixel and a right pixel of the pixel point may be omitted (detection on an upper pixel and a left pixel of a pixel point adjacent to the pixel point includes detection on the lower pixel and the right pixel of the pixel point), so as to avoid repetitive detection. After detection on all pixels is completed, the pixel points on the current boundary of the to-be-displayed image may be acquired.

530: Acquire a distance parameter of the terminal.

It should be understood that, there may be multiple manners of acquiring the foregoing distance, for example, when a display screen is a display screen of a mobile phone, and a viewer is a user of the mobile phone, a distance between an eye of the user and the display screen may be acquired by using a distance sensor on the mobile phone. Optionally, the distance between the eye of the user and the screen may also be deduced based on a type of an APP used by the user or a usage scenario preset in the mobile phone. For example, when a user uses a book-type APP, the to-be-displayed image is a character image, a distance between an eye of the user and a display screen of a mobile phone may be roughly estimated based on a size of the display screen and an average value of human eye visions.

540: Select a candidate value corresponding to the distance parameter from multiple candidate values of an anti-aliasing parameter as a value of the anti-aliasing parameter according to the distance parameter, where the anti-aliasing parameter may include a boundary determining threshold, a maximum step size for search on a horizontal edge, and a maximum step size for search on a bevel edge; and the anti-aliasing parameter may further include a geometrical boundary.

That is, different anti-aliasing parameters are corresponding to different anti-aliasing algorithms.

Specifically, after the distance parameter is acquired, quality of a final to-be-rendered picture may be graded according to the distance parameter. For example, the following quality grading manner is used: Four profiles are set, which are separately Ultra, High, Medium, and Low, which are corresponding distances, between a human eye and a display screen, of less than 10 cm, 10 cm to 20 cm, 20 cm to 30 cm, and greater than 30 cm, respectively. Different quality grades may be corresponding to different anti-aliasing parameters, that is, corresponding to different boundary determining thresholds, maximum step sizes for search on a horizontal edge, geometrical boundaries, and maximum step sizes for search on a bevel edge, such as, Low (0.15, 4, 100, 0), Medium (0.1, 8, 100, 0), High (0.1, 16, 25, 8), Ultra (0.05, 32, 25, 16), where when a value of the geometrical boundary is 100, it indicates that detection on the geometrical boundary is not performed, and an effect of anti-aliasing increases as the value thereof decreases.

550: Determine a pixel point on a reconstructed boundary of the to-be-displayed image according to the pixel point on the current boundary and the anti-aliasing parameter.

Specifically, the reconstructed boundary may be classified into two types in terms of line type, which are a boundary being mainly horizontal and a boundary being mainly perpendicular, and the two are similar in calculation manner. An example in which a boundary being mainly horizontal is reconstructed is taken. A step width L of a pixel point x on the current boundary in a horizontal direction is first calculated, and then the straight line is extended to the left and to the right separately. Taking search to the right as an example, a next step width may be L, L-1 or L+1. If a pixel at a location of x=x+L is an endpoint of a line segment, that is, the pixel satisfies a determining threshold of a boundary and the boundary is a geometrical boundary, the search continues to be performed. Otherwise, if a pixel at a location of x=x+L-1 or x=x+L+1 is an endpoint of a line segment, the search ends. If none of the foregoing three locations is an endpoint of a line segment, the search process end, and the current endpoint location x is returned to. The search process is performed at most for times of the maximum step size for search on a horizontal edge.

After it is determined that a new step width is L or L' (L'=L-1 or L+1), whether a pixel at either of two step widths of x+L and x+L' is the endpoint of the line segment continues to be detected. If the pixel is the endpoint, x=x+L or x=x+L' continues to be cycled. If not, the endpoint detection ends, and the current endpoint location x is returned to. The process is performed at most for times of the maximum step size for search on a bevel edge. So far, a new location of x is a pixel point on the reconstructed boundary.

560: Perform anti-aliasing processing according to the pixel point on the reconstructed boundary by using a morphological anti-aliasing algorithm.

For a specific implementation of step 560, reference may be made to the prior art. For example, weights of the pixel point on the reconstructed boundary and an ambient pixel point are first calculated, and then colors are mixed based on the weights.

Specifically, a weight of a pixel around a reconstructed boundary relative to a reconstructed pixel is calculated according to an area generated between the reconstructed boundary and the current boundary. An area occupied by a pixel is that: an example in which the reconstructed boundary passes through an upper boundary of the pixel is taken, a weight of an upper pixel relative to the pixel is an area surrounded by the upper boundary, the reconstructed boundary, and left and right boundaries of the pixel, that is, a weight value of an effect of the upper pixel on the pixel. A similar method is also applicable to a situation in which the reconstructed boundary passes through a left boundary.

After a weight (such as p_e1, p_e2, p_e3, ...) of a pixel p_0 (that is, a pixel point p_0 on the reconstructed boundary) of anti-aliasing is acquired, a final color of the pixel p_0 may be calculated in such a way as: p_0_new = p_0 * p_w0 + p_e1 * p_w1 + p_e2 * p_w2 + p_e3 * p_w3 + ..., where p is a pixel value including components R, G, and B. After all pixels that require anti-aliasing processing are processed, a resultant picture is output.

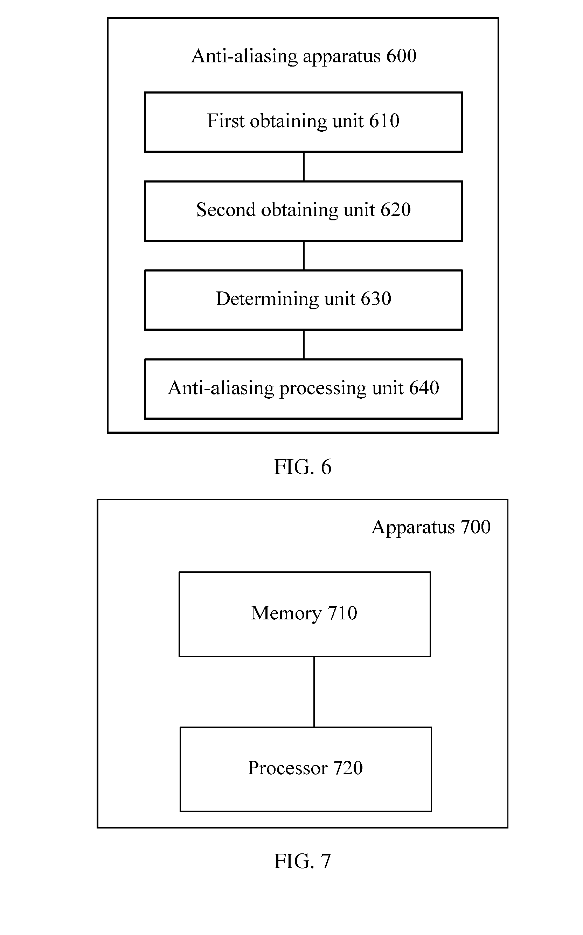

The foregoing describes the image anti-aliasing method according to the embodiments of the present invention in detail with reference to FIG. 4 and FIG. 5, and the following describes an image anti-aliasing apparatus according to an embodiment of the present invention in detail with reference to FIG. 6 and FIG. 7. It should be understood that, the anti-aliasing apparatuses in FIG. 6 and FIG. 7 can implement the steps in the methods in FIG. 4 and FIG. 5, and to avoid repetition, repetitive description is properly omitted.

FIG. 6 is a schematic block diagram of an image anti-aliasing apparatus according to an embodiment of the present invention. The anti-aliasing apparatus 600 in FIG. 6 includes:
a first acquiring unit 610, configured to acquire a to-be-displayed image in a terminal;
a second acquiring unit 620, configured to acquire a current distance parameter of the terminal, where the current distance parameter is used to indicate a distance between an eye of a user of the terminal and a display screen of the terminal;
a determining unit 630, configured to determine a current anti-aliasing algorithm according to the current distance parameter by using a correspondence between a distance parameter and an anti-aliasing algorithm; and
an anti-aliasing processing unit 640, configured to perform anti-aliasing processing on the to-be-displayed image according to the current anti-aliasing algorithm.

In this embodiment of the present invention, anti-aliasing processing is performed on a to-be-displayed image based on a distance parameter, that is, an anti-aliasing processing manner is dynamically adjusted according to the distance parameter, which is more flexible when compared with the prior art. Specifically, when a distance between a viewer and a display screen is relatively far, an anti-aliasing algorithm with a fast calculation speed but general quality may be used, so as to save calculation resources, and when the distance between the viewer and the display screen is relatively close, an anti-aliasing algorithm with high quality may be used, so as to improve image rendering quality.

Optionally, as an embodiment, the correspondence between a distance parameter and an anti-aliasing algorithm includes a correspondence between a first distance parameter and a first anti-aliasing algorithm, and a correspondence between a second distance parameter and a second anti-aliasing algorithm, and the determining unit 630 is specifically configured to: when the current distance parameter is the first distance parameter, determine the first anti-aliasing algorithm as the current anti-aliasing algorithm; or when the current distance parameter is the second distance parameter, determine the second anti-aliasing algorithm as the current anti-aliasing algorithm.

Optionally, as an embodiment, the correspondence between a distance parameter and an anti-aliasing algorithm is a correspondence between a first distance parameter and a first anti-aliasing algorithm, and the determining unit 630 is specifically configured to: when the current distance parameter is the first distance parameter, determine the first anti-aliasing algorithm as the current anti-aliasing algorithm.

Optionally, as an embodiment, the correspondence between a distance parameter and an anti-aliasing algorithm includes one-to-one correspondences between N distance parameters and N anti-aliasing algorithms, where N≥3, and the determining unit 630 is specifically configured to select a target distance parameter to which the current distance parameter belongs from the N distance parameters; and determine an anti-aliasing algorithm corresponding to the target distance parameter as the current anti-aliasing algorithm.

Optionally, as an embodiment, the second acquiring unit 620 is specifically configured to determine a distance between the user and the display screen by using a distance sensor on the terminal; and determine the current distance parameter of the terminal according to the distance.

Optionally, as an embodiment, the second acquiring unit 620 is specifically configured to determine an application currently used by the user of the terminal; and acquire the current distance parameter according to the currently used application and a correspondence between an application and a distance parameter.

Optionally, as an embodiment, the second acquiring unit 620 is specifically configured to determine a usage scenario of the terminal; and acquire the current distance parameter according to the current usage scenario and a correspondence between a usage scenario and a distance parameter.

FIG. 7 is a schematic block diagram of an image anti-aliasing apparatus according to an embodiment of the present invention. The anti-aliasing apparatus 700 in FIG. 7 includes:
a memory 710, configured to store a program; and
a processor 720, configured to execute the program, where when the program is executed, the processor 720 is specifically configured to acquire a to-be-displayed image in a terminal; acquire a current distance parameter of the terminal, where the current distance parameter is used to indicate a distance between an eye of a user of the terminal and a display screen of the terminal; determine a current anti-aliasing algorithm according to the current distance parameter by using a correspondence between a distance parameter and an anti-aliasing algorithm; and perform anti-aliasing processing on the to-be-displayed image according to the current anti-aliasing algorithm.

In this embodiment of the present invention, anti-aliasing processing is performed on a to-be-displayed image based on a distance parameter, that is, an anti-aliasing processing manner is dynamically adjusted according to the distance parameter, which is more flexible when compared with the prior art. Specifically, when the distance between the viewer and the display screen is relatively far, an anti-aliasing algorithm with a fast calculation speed but general quality may be used, so as to save calculation resources, and when the distance between the viewer and the display screen is relatively close, an anti-aliasing algorithm with high quality may be used, so as to improve image rendering quality.

Optionally, as an embodiment, the correspondence between a distance parameter and an anti-aliasing algorithm includes a correspondence between a first distance parameter and a first anti-aliasing algorithm, and a correspondence between a second distance parameter and a second anti-aliasing algorithm, and the processor 720 is specifically configured to: when the current distance parameter is the first distance parameter, determine the first anti-aliasing algorithm as the current anti-aliasing algorithm; or when the current distance parameter is the second distance parameter, determine the second anti-aliasing algorithm as the current anti-aliasing algorithm.

Optionally, as an embodiment, the correspondence between a distance parameter and an anti-aliasing algorithm is a correspondence between a first distance parameter and a first anti-aliasing algorithm, and the processor 720 is specifically configured to: when the current distance parameter is the first distance parameter, determine the first anti-aliasing algorithm as the current anti-aliasing algorithm.

Optionally, as an embodiment, the correspondence between a distance parameter and an anti-aliasing algorithm includes one-to-one correspondences between N distance parameters and N anti-aliasing algorithms, where N≥3, and the processor 720 is specifically configured to select a target distance parameter to which the current distance parameter belongs from the N distance parameters; and determine an anti-aliasing algorithm corresponding to the target distance parameter as the current anti-aliasing algorithm.

Optionally, as an embodiment, the processor 720 is specifically configured to determine a distance between the user and the display screen by using a distance sensor on the terminal; and determine the current distance parameter of the terminal according to the distance.

Optionally, as an embodiment, the processor 720 is specifically configured to determine an application currently used by the user of the terminal; and acquire the current distance parameter according to the currently used application and a correspondence between an application and a distance parameter.

Optionally, as an embodiment, the processor 720 is specifically configured to determine a usage scenario of the terminal; and acquire the current distance parameter according to the current usage scenario and a correspondence between a usage scenario and a distance parameter.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An image anti-aliasing method, comprising:
acquiring a to-be-displayed image in a terminal;
acquiring a current distance parameter of the terminal, wherein the current distance parameter is used to indicate a distance between an eye of a user of the terminal and a display screen of the terminal;
determining a current anti-aliasing algorithm according to the current distance parameter by using a correspondence between a distance parameter and an anti-aliasing algorithm; and
performing anti-aliasing processing on the to-be-displayed image according to the current anti-aliasing algorithm.

2. The method according to claim 1, wherein the correspondence between a distance parameter and an anti-aliasing algorithm comprises a correspondence between a first distance parameter and a first anti-aliasing algorithm, and a correspondence between a second distance parameter and a second anti-aliasing algorithm, and
the determining a current anti-aliasing algorithm according to the current distance parameter by using a correspondence between a distance parameter and an anti-aliasing algorithm comprises:
when the current distance parameter is the first distance parameter, determining the first anti-aliasing algorithm as the current anti-aliasing algorithm; or
when the current distance parameter is the second distance parameter, determining the second anti-aliasing algorithm as the current anti-aliasing algorithm.

3. The method according to claim 1, wherein the correspondence between a distance parameter and an anti-aliasing algorithm is a correspondence between a first distance parameter and a first anti-aliasing algorithm, and
the determining a current anti-aliasing algorithm according to the current distance parameter by using a correspondence between a distance parameter and an anti-aliasing algorithm comprises:
when the current distance parameter is the first distance parameter, determining the first anti-aliasing algorithm as the current anti-aliasing algorithm.

4. The method according to claim 1, wherein the correspondence between a distance parameter and an anti-aliasing algorithm comprises one-to-one correspondences between N distance parameters and N anti-aliasing algorithms, wherein N≥3, and
the determining a current anti-aliasing algorithm according to the current distance parameter by using a correspondence between a distance parameter and an anti-aliasing algorithm comprises:
selecting a target distance parameter to which the current distance parameter belongs from the N distance parameters; and
determining an anti-aliasing algorithm corresponding to the target distance parameter as the current anti-aliasing algorithm.

5. The method according to any one of claims 1 to 4, wherein the acquiring a current distance parameter of the terminal comprises:
determining a distance between the user and the display screen by using a distance sensor on the terminal; and
determining the current distance parameter of the terminal according to the distance.

6. The method according to any one of claims 1 to 4, wherein the acquiring a current distance parameter of the terminal comprises:
determining an application currently used by the user of the terminal; and
acquiring the current distance parameter according to the currently used application and a correspondence between an application and a distance parameter.

7. The method according to any one of claims 1 to 4, wherein the acquiring a current distance parameter of the terminal comprises:
determining a usage scenario of the terminal; and
acquiring the current distance parameter according to the current usage scenario and a correspondence between a usage scenario and a distance parameter.

8. An image anti-aliasing apparatus, comprising:
a first acquiring unit, configured to acquire a to-be-displayed image in a terminal;
a second acquiring unit, configured to acquire a current distance parameter of the terminal, wherein the current distance parameter is used to indicate a distance between an eye of a user of the terminal and a display screen of the terminal;
a determining unit, configured to determine a current anti-aliasing algorithm according to the current distance parameter by using a correspondence between a distance parameter and an anti-aliasing algorithm; and
an anti-aliasing processing unit, configured to perform anti-aliasing processing on the to-be-displayed image according to the current anti-aliasing algorithm.

9. The apparatus according to claim 8, wherein the correspondence between a distance parameter and an anti-aliasing algorithm comprises a correspondence between a first distance parameter and a first anti-aliasing algorithm, and a correspondence between a second distance parameter and a second anti-aliasing algorithm, and the determining unit is specifically configured to: when the current distance parameter is the first distance parameter, determine the first anti-aliasing algorithm as the current anti-aliasing algorithm; or when the current distance parameter is the second distance parameter, determine the second anti-aliasing algorithm as the current anti-aliasing algorithm.

10. The apparatus according to claim 8, wherein the correspondence between a distance parameter and an anti-aliasing algorithm is a correspondence between a first distance parameter and a first anti-aliasing algorithm, and the determining unit is specifically configured to: when the current distance parameter is the first distance parameter, determine the first anti-aliasing algorithm as the current anti-aliasing algorithm.

11. The apparatus according to claim 8, wherein the correspondence between a distance parameter and an anti-aliasing algorithm comprises one-to-one correspondences between N distance parameters and N anti-aliasing algorithms, wherein N≥3, and the determining unit is specifically configured to select a target distance parameter to which the current distance parameter belongs from the N distance parameters; and determine an anti-aliasing algorithm corresponding to the target distance parameter as the current anti-aliasing algorithm.

12. The apparatus according to any one of claims 8 to 11, wherein the second acquiring unit is specifically configured to determine a distance between the user and the display screen by using a distance sensor on the terminal; and determine the current distance parameter of the terminal according to the distance.

13. The apparatus according to any one of claims 8 to 11, wherein the second acquiring unit is specifically configured to determine an application currently used by the user of the terminal; and acquire the current distance parameter according to the currently used application and a correspondence between an application and a distance parameter.

14. The apparatus according to any one of claims 8 to 11, wherein the second acquiring unit is specifically configured to determine a usage scenario currently used by the user of the terminal; and acquire the current distance parameter according to the current usage scenario and a correspondence between a usage scenario and a distance parameter.
